# EUROPÄISCHE PATENTSCHRIFT

(11) **EP 4 484 399 B1**
(45) Veröffentlichungstag und Bekanntmachung des Hinweises auf die Patenterteilung: **11.03.2026**
(21) Anmeldenummer: 23181465.8
(22) Anmeldetag: 26.06.2023
(51) Int. Cl.: C04B 28/04, C04B 28/06, C04B 28/14, C04B 111/62

(54) **SELBSTNIVELLIERENDE SPACHTELMASSE MIT NIEDRIGEM TREIBHAUSPOTENTIAL**
SELF-LEVELLING COMPOUND WITH LOW GREENHOUSE POTENTIAL
MASTIC AUTO-NIVELANT À FAIBLE POTENTIEL DE SERRE

(43) Veröffentlichungstag der Anmeldung: 01.01.2025
(73) Patentinhaber: Uzin Utz SE, 89079 Ulm (DE)
(72) Erfinder: Tsalos, Johannis, 89081 Ulm (DE); Jöchle, Timo, 88444 Ummendorf (DE); Jochmann, Phillip, 89077 Ulm (DE); Umkehrer, Michael, 85368 Moosburg (DE); Spirkl, Sebastian, 89231 Neu-Ulm (DE)
(74) Vertreter: Isarpatent

(56) Entgegenhaltungen:
- WO-A2-2022/154774
- CN-A- 102 190 463
- CN-A- 111 943 578
- DE-A1- 102022 002 721
- FR-A1- 3 125 034
- KR-A- 20050 004 356
- KR-B1- 100 841 781
- SIRICO ALICE ET AL: "Mechanical characterization of cement-based materials containing biochar from gasification", CONSTRUCTION AND BUILDING MATERIALS, ELSEVIER, NETHERLANDS, vol. 246, 22 February 2020 (2020-02-22), XP086136624, ISSN: 0950-0618, [retrieved on 20200222], DOI: 10.1016/J.CONBUILDMAT.2020.118490
- SUAREZ-RIERA D. ET AL: "The use of Biochar to reduce the carbon footprint of cement-based materials", vol. 26, 1 January 2020 (2020-01-01), pages 199 - 210, XP055973700, ISSN: 2452-3216, Retrieved from the Internet <URL:https://www.sciencedirect.com/science/article/pii/S2452321620304315/pdf?md5=633e0b9fcc564d324a7c3e154b4b1dbd&pid=1-s2.0-S2452321620304315-main.pdf> DOI: 10.1016/j.prostr.2020.06.023

## Beschreibung

### Gebiet der Erfindung

Die Erfindung betrifft eine selbstnivellierende Spachtelmasse mit niedrigem Treibhauspotential.

### Stand der Technik

Mineralische Baustoffe und im speziellen selbstnivellierende Spachtelmassen leisten insbesondere aufgrund ihrer mineralischen Bestandteile (zum Beispiel Zement) und ihrer organischen Inhaltsstoffe (zum Beispiel Dispersionspulver) einen Beitrag zum klimaschädlichen CO₂-Ausstoss. Beispielsweise besitzen marktübliche Spachtelmassen Treibhauspotential-Werte (GWP-Werte) zwischen 0,26 und 0,51 kg CO₂-Äquivalent/kg.

Um das Treibhauspotential von mineralischen Baustoffen zu senken wird im Stand der Technik vorgeschlagen, sogenannte Biokohlenstoffe zu Baustoffen hinzuzufügen. Solche Biokohlenstoffe oder "Pflanzenkohlen" sind durch Carbonisierung pflanzlicher bzw. holzartiger Ausgangsstoffe hergestellte Rohstoffe. Unter Carbonisierung werden Pyrolyse und verschiedene Prozessführungen verstanden, welchen gemein ist, dass pflanzliches Material schonend, teils unter Drücken, erhitzt wird, um den Kohlenstoffanteil anzureichern. Das vor der Carbonisierung ursprünglich von Pflanzen im Lebenszyklus aufgenommene CO₂ wird der Atmosphäre entzogen, weshalb die Biokohlenstoffe als Kohlenstoff-Senken fungieren und einen positiven Beitrag leisten, wenn sie Bauprodukten bzw. Spachtelmassen beigemischt werden.

Ein solcher Ansatz wird beispielsweise in WO 2023/281220 A1 verfolgt, wobei zementäre Zusammensetzungen beschrieben werden, die bis zu 30% kohlensäurehaltige Biokohle enthalten. Dadurch kann eine CO₂-Austoßreduktion zwischen 0,207 und 0,382 kg CO₂-Äquivalent/kg erreicht werden.

Weiterhin wird in WO 2023/006136 A1 ein Verfahren zur Herstellung von Beton mit verbesserter CO₂-Bilanz beschrieben, wobei eine Mischung aus Bindemittel, Zuschlagstoff und Biokohle unter Zugabe eines wässrigen Lösungsmittels hergestellt wird. Die Biokohle hat dabei einen Anteil von 1 bis 30% der Gesamtmenge der Mischung. Durch den Einsatz von Biokohle kann dabei die Kohlenstoffbilanz eines Kubikmeters Beton um bis zu 70% verbessert werden.

In WO 2023/285501 werden Trockenmörtelzusammensetzungen offenbart, die 10 bis 50 Gew.-% Biomassen-Asche enthalten, wodurch eine Reduktion der CO₂-Emission um 20 bis 35% ermöglicht wird. Dabei sind die Trockenmörtelzusammensetzungen insbesondere als Fliesenkleber geeignet.

In den oben genannten Offenbarungen werden allgemein Baustoffmischungen offenbart, in denen durch den Zusatz von Biokohle oder Biomassen-Asche die CO₂-Bilanz der Mischungen verbessert wird. Allerdings kann die Biokohle die Eigenschaften der Baustoffmischungen erheblich beeinflussen. Insbesondere bei selbstnivellierenden Spachtelmassen muss bei Änderung der Komponenten der Spachtelmassen sichergestellt werden, dass die selbstnivellierenden Eigenschaften weiterhin gegeben sind. Wenn durch das bloße Einmischen beliebiger Biokohlenstoffe eine dicke, zähe Konsistenz mit fehlenden Selbstverlaufseigenschaften resultiert, gilt die Aufgabe der Bereitstellung einer selbstnivellierenden Spachtelmasse als nicht gelöst. In keiner der genannten Offenbarungen wird eine Spachtelmasse beschrieben, die Biokohlenstoff enthält und selbstverlaufende Eigenschaften aufweist.

Zusätzlich zu den oben genannten Druckschriften wird auf folgenden Stand der Technik hingewiesen: KR 100 841 781 B1 offenbart eine selbstnivellierende Bodenausgleichsmasse auf Zementbasis, welche Holzkohlenpulver umfassen kann. KR 2005 0004356 A beschreibt einen Baumörtel mit Aktiv- und Holzkohle. CN 111 943 578 A offenbart einen selbstnivellierenden Beton mit Kohlenpulver. WO 2022/154774 A2 offenbart ein Verbundbeschichtungsmaterial mit Zementbindemittel und Kohlenstoffstaub. CN 102 190 463 A beschreibt ein umweltfreundliches, selbstnivellierendes Material auf Zementbasis. FR 3 125 034 A1 offenbart eine Zementzusammensetzung mit Biokohle.

Demnach besteht der Bedarf an der Entwicklung einer selbstnivellierenden Spachtelmasse mit verringertem Treibhauspotential. Weiterhin besteht der Bedarf an einer Pflanzenkohle, die zur Reduktion des Treibhauspotentials von selbstnivellierenden Spachtelmassen verwendet werden kann.

### Zusammenfassung der Erfindung

In einem ersten Aspekt stellt die vorliegende Erfindung eine selbstnivellierende Spachtelmasse auf Zement- oder Gips-Basis bereit, die 3 bis 13 Gew.-% Pflanzenkohle, basierend auf dem Trockengewicht der selbstnivellierenden Spachtelmasse, umfasst, wobei die Pflanzenkohle eine Partikelgröße d10 von höchstens 3,2 µm und eine spezifische Oberfläche von mindestens 7800 cm²/g aufweist, wobei die Partikelgröße und die spezifische Oberfläche mittels lasergranulometrischer Messung bestimmt werden und wobei sich der Begriff "Pflanzenkohle" auf durch Carbonisierung pflanzlicher und/oder holzartiger Ausgangsstoffe hergestellte Materialien bezieht.

Die Erfinder haben überraschenderweise herausgefunden, dass ausschließlich durch den Einsatz einer Pflanzenkohle mit einer Partikelgröße d10 von höchstens 3,2 µm und einer spezifischen Oberfläche von mindestens 7800 cm²/g eine Spachtelmasse bereitgestellt werden kann, die selbstverlaufende Eigenschaften aufweist. Im Markt verfügbare bzw. angebotene Pflanzenkohlen, welche formal zur GWP-Reduktion von Spachtelmassen führen, können beim Einsatz in selbstnivellierenden Boden-Spachtelmassen zum Verlust zufriedenstellender anwendungstechnischer Eigenschaften wie dem Selbstverlauf führen. Durch den Einsatz von 3 bis 13 Gew.-% dieser Pflanzenkohle kann zudem der GWP-Wert reduziert werden, wobei die Spachtelmasse dadurch nicht nur klimaneutral sein, sondern sogar einen klimapositiven Beitrag leisten kann.

In einem weiteren Aspekt stellt die vorliegende Erfindung die Verwendung von Pflanzenkohle zur Reduktion des Treibhauspotentials (GWP - Global Warming Potential) von selbstnivellierenden Spachtelmassen auf Zement- oder Gips-Basis bereit, wobei die Pflanzenkohle eine Partikelgröße d10 von höchstens 3,2 µm und eine spezifische Oberfläche von mindestens 7800 cm²/g aufweist. Wie oben beschrieben kann durch den Einsatz der Pflanzenkohle mit den genannten Eigenschaften der Selbstverlauf der Spachtelmasse erreicht und der GWP-Wert erheblich verringert werden.

Weitere Aspekte der vorliegenden Erfindung sind den abhängigen Ansprüchen und der detaillierten Beschreibung zu entnehmen.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Mengenangaben im Rahmen der vorliegenden Erfindung beziehen sich auf Gew.-%, soweit nicht anderweitig angegeben oder aus dem Kontext ersichtlich ist.

Im Rahmen der vorliegenden Erfindung können "selbstnivellierend" und "selbstverlaufend" synonym verwendet werden. Wie allgemein bekannt bedeutet "selbstnivellierend", dass sich eine mit Wasser angemachte Spachtelmasse auf einem Untergrund selbstständig ausbreitet und eine ebene Oberfläche bildet. Spachtelmassen mit selbstnivellierenden Eigenschaften sind kommerziell erhältlich und im Stand der Technik bekannt. Selbstnivellierende Spachtelmassen sind für eine Anwendung zur Nivellierung von Untergründen und ggf. vorbereitend für die spätere Verlegung eines Bodenbelags geeignet. In bestimmten Ausführungsformen ist eine Spachtelmasse selbstnivellierend, wenn sie die Fähigkeit besitzt sich unter ihrem Eigengewicht zu verteilen. Gemäß manchen Ausführungsformen ist eine Spachtelmasse selbstnivellierend, wenn die Spachtelmasse eine Auslaufzeit von maximal 120 s und ein Ausbreitmaß von mindestens 11 cm, gemessen mit einem Auslaufbecher gemäß der DIN 53211:1987-06 mit einer 6 mm Düse, aufweist. Zur Messung der Auslaufzeit und des Ausbreitmaßes wird die Spachtelmasse mit Wasser angemacht. Dabei können 22 bis 28 Gew.-% Wasser zur trockenen Spachtelmasse gegeben werden, bezogen auf das Trockengewicht der Spachtelmasse. Dabei bedeutet "trocken", dass die Spachtelmasse nicht mit Wasser angemacht wurde. Gemäß einigen Ausführungsformen wird zur Messung der Auslaufzeit und des Ausbreitmaßes ein Auslaufbecher gemäß der DIN 53211:1987-06 verwendet, mit dem Unterschied, dass statt der in der DIN 53211:1987-06 angegebenen 4 mm Düse eine 6 mm Düse verwendet wird. Eine ausführliche Beschreibung der Bestimmung der Auslaufzeit und des Ausbreitmaßes ist weiter unten gegeben.

Gemäß manchen Ausführungsformen bezieht sich der Begriff "Trockengewicht" auf das Gewicht der pulverförmigen und/oder trockenen Spachtelmasse. In einigen Ausführungsformen bedeutet "pulverförmige Spachtelmasse", dass die Spachtelmasse nicht mit Wasser angemacht wurde. In bestimmten Ausführungsformen bedeutet der Begriff "trockene Spachtelmasse", dass die Spachtelmasse einen Feuchtigkeitsgehalt von weniger als 1,2 Gew.-%, bevorzugt weniger als 1,1 Gew.-% und weiter bevorzugt weniger als 1,0 Gew.-% aufweist, bezogen auf das Trockengewicht der Spachtelmasse. Der Feuchtigkeitsgehalt der Spachtelmasse wird hierbei mittels der Darr-Methode (gravimetrische Feuchtemessung) durch Gewichtsvergleich der Probe vor und nach dem Trocknen bei 40 °C ermittelt. Eine ausführliche Beschreibung der Bestimmung des Feuchtigkeitsgehalts von Spachtelmassen ist weiter unten gegeben.

Gemäß bestimmten Ausführungsformen bezieht sich die "selbstnivellierende Spachtelmasse" auf eine Trockenmischung und/oder Pulvermischung einer Spachtelmasse, bevor diese mit Wasser angemacht wird. Gemäß manchen Ausführungsformen bezieht sich die selbstnivellierende Spachtelmasse auf eine Spachtelmasse, die bereits mit Wasser angemacht wurde.

Im Kontext der vorliegenden Erfindung können die Begriffe "Biokohlenstoff", "Biokohle" und "Pflanzenkohle" synonym verwendet werden. Pflanzenkohlen sind durch Carbonisierung pflanzlicher und/oder holzartiger Ausgangsstoffe hergestellte Materialien. In manchen Ausführungsformen ist die "Carbonisierung" die Pyrolyse von pflanzlichen Material. Dabei kann pflanzliches Material erhitzt und/oder unter Druck erhitzt werden, um den Kohlenstoffanteil anzureichern. Das vor der Carbonisierung ursprünglich von Pflanzen im Lebenszyklus aufgenommene CO₂ wird der Atmosphäre entzogen, weshalb Pflanzenkohlen als Kohlenstoff-Senken (negativer CO₂-Ausstoß) fungieren und bei der Zugabe zu Produktzusammensetzungen zu einem reduzierten CO₂-Fußabdruck dieser führen. Allgemein können Pflanzenkohlen einen Kohlenstoffgehalt von ≥ 75 Gew.-%, bezogen auf das Gesamtgewicht der Pflanzenkohle, eine Partikelgröße von ≤ 1 mm, einen Aschegehalt von < 15%, einen Wassergehalt von < 10% und eine spezifische Oberfläche von mindestens 3000 cm²/g aufweisen.

In manchen Ausführungsformen ist die Spachtelmasse eine Boden-Spachtelmasse. Gemäß bestimmten Ausführungsformen ist die Spachtelmasse eine Ausgleichsmasse. Im Rahmen der vorliegenden Erfindung können Spachtelmassen auf Zement-Basis ("zementäre Spachtelmassen") und/oder Gips-Basis ("Calciumsulfat-gebundene Spachtelmassen") sein. Maßgeblich hierfür ist das anorganische Bindemittel mit dem höchsten Anteil im jeweiligen Produkt. Insbesondere kann die Spachtelmasse der vorliegenden Erfindung eine zementäre Spachtelmasse oder Calciumsulfat-gebundene Spachtelmasse sein, wie im TKB-Merkblatt 9, Stand Juli 2019, Kapitel 4.1 definiert.

Im Rahmen der vorliegenden Erfindung bedeutet die Abkürzung "GWP" "Global Warming Potential", zu Deutsch "Treibhauspotential". Dabei ist der GWP-Wert einer chemischen Verbindung, einer Komponente oder einer Mischung eine Maßzahl für ihren relativen Beitrag zum Treibhauseffekt. Unter GWP wird allgemein die Summe aller aufgenommenen oder emittierten Treibhausgase über die betrachteten Phasen des Produkt-Lebenszyklus verstanden. Dabei werden die Treibhausgas-Flüsse in die gemeinsame Einheit: *kg CO₂*-*Äquivalente*/*kg* umgewandelt und aufsummiert. Die Berechnung des produktspezifischen GWPs erfolgt nach den Rechenregeln des DIN EN 15804:2012+A2:2019 Standards. Dabei können die Lebenszyklusphasen A1 bis A3 der Norm betrachtet und sowohl primäre als auch sekundäre Daten miteinbezogen werden. In einigen Ausführungsformen der vorliegenden Erfindung wird der GWP-Wert gemäß DIN EN 15804:2012+A2:2019 bestimmt.

"Partikelgröße x10" und "Partikelgröße d10", "Partikelgröße x50" und "Partikelgröße d50", "Partikelgröße x90" und "Partikelgröße d90" sowie "Partikelgröße x99" und "Partikelgröße d99" können synonym verwendet werden. Wie allgemein bekannt bezieht sich die Partikelgröße d10 bzw. d50 bzw. d90 bzw. d99 eines pulverförmigen Stoffs oder Gemisches auf den Wert, an welchem 10% bzw. 50% bzw. 90% bzw. 99% der Partikel kleiner als eine bestimmte Partikelgröße sind. In einigen Ausführungsformen bezieht sich die Partikelgröße auf den Äquivalenzdurchmesser der Partikel. Die Partikelgröße d10, die Partikelgröße d50, die Partikelgröße d90 und/oder die Partikelgröße d99 werden mittels lasergranulometrischer Messung bestimmt. Gemäß bestimmten Ausführungsformen wird zur Bestimmung der Partikelgrößen d10, der Partikelgröße d50, der Partikelgröße d90, der Partikelgröße d99 und/oder der spezifischen Oberfläche mittels lasergranulometrischer Messung ein Heywoodfaktor von 1 und/oder eine theoretische Dichte von 1 g/cm³ angenommen. Zur Bestimmung der Partikelgrößen d10, der Partikelgröße d50, der Partikelgröße d90, der Partikelgröße d99 und der spezifischen Oberfläche mittels lasergranulometrischer Messung eine ideale Kugelgeometrie der Partikel angenommen.

Wie allgemein bekannt bezeichnet das Anmachen von Spachtelmassen das Mischen der trockenen Spachtelmasse mit Wasser. Üblicherweise ist die Menge des Wassers zum Anmachen der Spachtelmasse vom Hersteller vorgegeben. Das Wasser zum Anmachen der Spachtelmasse wird auch als "Anmachwasser" oder "Zugabewasser" bezeichnet und bezieht sich auf das Wasser, welches bei der Mischung und Aufbereitung der Spachtelmasse eingebracht werden muss, um diese verarbeitbar zu machen und den Abbindeprozess in Gang zu bringen. Die Menge des Anmachwassers kann der Fachmann ohne weiteres durch wenige Handversuche ermitteln, wenn diese nicht bereits durch den Hersteller auf den jeweiligen technischen Begleitdokumenten der Spachtelmassen angegeben ist. Gemäß bestimmten Ausführungsformen sind die Begriffe "Anmachen" und "Anmischen" äquivalent.

Ein erster Aspekt der Erfindung bezieht sich auf eine selbstnivellierende Spachtelmasse auf Zement- oder Gips-Basis, umfassend 3 bis 13 Gew.-% Pflanzenkohle, basierend auf dem Trockengewicht der selbstnivellierenden Spachtelmasse, wobei die Pflanzenkohle eine Partikelgröße d10 von höchstens 3,2 µm und eine spezifische Oberfläche von mindestens 7800 cm²/g aufweist. Die Partikelgröße d10 und die spezifische Oberfläche werden mittels lasergranulometrischer Messung bestimmt.

Die Erfinder haben in umfangreichen Studien überraschenderweise herausgefunden, dass ausschließlich Pflanzenkohlen, die eine Partikelgröße d10 von höchstens 3,2 µm und eine spezifische Oberfläche von mindestens 7800 cm²/g aufweisen, zu Spachtelmassen mit selbstnivellierenden Eigenschaften führen. Mit Pflanzenkohlen mit Partikelgrößen d10 größer als 3,2 µm und spezifischen Oberflächen von kleiner als 7800 cm²/g konnten keine selbstnivellierenden Spachtelmassen bereitgestellt werden. Insbesondere kann durch den Einsatz von 3 bis 13 Gew.-% dieser Pflanzenkohlen das Treibhauspotential der selbstnivellierenden Spachtelmassen gesenkt werden. In einigen Ausführungsformen kann sogar ein negativer GWP-Wert, beispielsweise von - 0,05 kg CO₂-Äquivalent/kg erreicht werden, was nicht nur zu einer klimaneutralen Spachtelmasse, sondern zu einer Spachtelmasse mit negativen CO₂-Fußabdruck führt. Somit stellt die vorliegende Erfindung eine Spachtelmasse mit hervorragenden selbstverlaufenden Eigenschaften und einem zugleich stark verringerten CO₂-Fußabdruck bereit.

Gemäß bestimmten Ausführungsformen umfasst die selbstnivellierende Spachtelmasse 5 bis 12 Gew.-% und bevorzugt 6 bis 10 Gew.-% Pflanzenkohle, basierend auf dem Trockengewicht der selbstnivellierenden Spachtelmasse. In manchen Ausführungsformen weist die Pflanzenkohle eine Partikelgröße d10 von höchstens 3,0 µm und bevorzugt höchstens 2,9 µm auf. Gemäß einigen Ausführungsformen weist die Pflanzenkohle eine spezifische Oberfläche von mindestens 8000 cm²/g, bevorzugt mindestens 8150 cm²/g auf. Die oben genannten Effekte und Vorteile sind bei diesen Ausführungsformen besonders ausgeprägt.

In bestimmten Ausführungsformen kann die Pflanzenkohle eine Partikelgröße d10 von mindestens 2,5 µm, bevorzugt mindestens 2,7 µm aufweisen. Gemäß manchen Ausführungsformen kann die Pflanzenkohle eine spezifische Oberfläche von höchstens 9500 cm²/g, bevorzugt höchstens 8500 cm²/g auf. Durch diese Ausführungsformen werden die anwendungstechnischen Eigenschaften der Spachtelmasse weiter verbessert.

Gemäß bestimmten Ausführungsformen weist die Pflanzenkohle eine Partikelgröße d50 von höchstens 16,7 µm, bevorzugt höchstens 16,4 µm auf. In einigen Ausführungsformen weist die Pflanzenkohle eine Partikelgröße d50 von mindestens 15,8 µm, bevorzugt mindestens 16,0 µm auf. Die Partikelgröße d50 wird mittels lasergranulometrischer Messung bestimmt. Bei diesen Ausführungsformen sind die oben genannten Vorteile und Effekte besonders ausgeprägt.

In einigen Ausführungsformen weist die Pflanzenkohle eine Partikelgröße d90 von höchstens 71,0 µm, bevorzugt höchstens 69,0 µm auf. In bestimmten Ausführungsformen weist die Pflanzenkohle eine Partikelgröße d90 von mindestens 65,5 µm, bevorzugt mindestens 66,5 µm auf. Gemäß bestimmten Ausführungsformen weist die Pflanzenkohle eine Partikelgröße d99 von höchstens 135,0 µm, bevorzugt höchstens 132,0 µm auf. In einigen Ausführungsformen weist die Pflanzenkohle eine Partikelgröße d99 von mindestens 125,0 µm, bevorzugt mindestens 127,0 µm auf. Die Partikelgröße d90 und/oder d99 wird mittels lasergranulometrischer Messung bestimmt. Gemäß dieser Ausführungsformen können die selbstverlaufenden Eigenschaften der Spachtelmasse weiter verbessert werden.

Gemäß bestimmten Ausführungsformen weist die Pflanzenkohle einen Wassergehalt von 3,7 bis 5,8 Gew.-%, bevorzugt 3,9 bis 4,5 Gew.-% auf, bezogen auf das Gesamtgewicht der Pflanzenkohle. In manchen Ausführungsformen wird der Wassergehalt der Pflanzenkohle mittels einer Ofentrocknung bei 40 °C bestimmt. In einigen Ausführungsformen weist die Pflanzenkohle einen Aschegehalt von 4,60 bis 5,00 Gew.-%, bevorzugt von 4,65 bis 4,80 Gew.-% auf, bezogen auf das Gesamtgewicht der Pflanzenkohle. Gemäß manchen Ausführungsformen wird der Aschegehalt mittels thermogravimetrische Analyse bestimmt. Die anwendungstechnischen Eigenschaften der Spachtelmasse werden durch diese Ausführungsformen weiter verbessert. In manchen Ausführungsformen weist die Pflanzenkohle einen Kohlenstoffgehalt von mindestens 78 Gew.-% auf, bezogen auf das Gesamtgewicht der Pflanzenkohle.

In bestimmten Ausführungsformen kann die Pflanzenkohle einen Anteil eines Füllstoffs einer Spachtelmasse mit selbstnivellierenden Eigenschaften ersetzen. Gemäß einigen Ausführungsformen umfasst die selbstnivellierende Spachtelmasse ferner einen Füllstoff, wobei der Gesamtgehalt an Pflanzenkohle und Füllstoff 40 bis 80 Gew.-%, bevorzugt 45 bis 70 Gew.-% beträgt, basierend auf dem Trockengewicht der selbstnivellierenden Spachtelmasse. Das Gewichtsverhältnis zwischen Pflanzenkohle und Füllstoff (Pflanzenkohle:Füllstoff) kann dabei 0,05:1 bis 0,50:1, bevorzugt 0,10:1 bis 0,25:1, weiter bevorzugt 0,12:1 bis 0,20:1 betragen. Durch diese Ausführungsformen werden die anwendungstechnischen Eigenschaften der Spachtelmasse weiter verbessert.

Gemäß einigen Ausführungsformen weist die selbstnivellierende Spachtelmasse einen GWP-Wert von höchstens 0,1 kg CO₂-Äquivalent/kg, bevorzugt höchstens 0,08 kg CO₂-Äquivalent/kg auf. Durch den Einsatz der Pflanzenkohle kann somit das Treibhauspotential der selbstnivellierenden Spachtelmasse reduziert werden.

In bestimmten Ausführungsformen weist die selbstnivellierende Spachtelmasse eine Auslaufzeit von höchstens 120 s und/oder ein Ausbreitmaß von mindestens 11 cm auf, gemessen mit einem Auslaufbecher mit einer 6 mm Düse. Insbesondere kann der Auslaufbecher ein Auslaufbecher gemäß der DIN 53211:1987-06 mit einer 6 mm Düse sein. Gemäß einigen Ausführungsformen wird die Auslaufzeit gemäß DIN 53211:1987-06 bestimmt, wobei statt den in der DIN 53211:1987-06 gemessenen Lacke, Anstrichstoffe und ähnliche Beschichtungsstoffe eine angemachte Spachtelmasse eingesetzt wird und wobei ein Auslaufbecher mit einer 6 mm Düse verwendet wird. In einigen Ausführungsformen wird eine angemachte Spachtelmasse dadurch erhalten, dass die trockene Spachtelmasse mit 22 bis 28 Gew.-%, insbesondere 23 bis 27 Gew.-% Wasser gemischt wird, bezogen auf das Trockengewicht der Spachtelmasse, optional wobei die dadurch erhaltene Mischung für 30 bis 60 s, insbesondere 45 s, mit einem Laborrührer bei 18 bis 20 °C homogenisiert wird. Dabei bedeutet "trocken", dass die Spachtelmasse nicht mit Wasser angemacht wurde. Gemäß bestimmten Ausführungsformen wird der Auslaufbecher nach 30 Sekunden (s), nachdem die Spachtelmasse angemacht wurde, mit der angemachten Spachtelmasse befüllt. Dies bedeutet, dass 30 s zwischen dem Anmachen der Spachtelmasse und dem Befüllen des Auslaufbechers abgewartet wird. In einigen Ausführungsformen wird der Auslauf der angemachten Spachtelmasse aus dem Auslaufbecher 15 s nach dem Befüllen des Auslaufbechers mit der angemachten Spachtelmasse gestartet. Der Start des Auslaufs der angemachten Spachtelmasse wird im Kontext der vorliegenden Erfindung auch als "Fließstart" bezeichnet. Insbesondere kann die Auslaufzeit nach der im untenstehenden Absatz "Bestimmung der Auslaufzeit (in Sekunden (s)) und des Ausbreitmaßes (in Zentimeter (cm))" bestimmt werden.

Gemäß manchen Ausführungsformen wird das Ausbreitmaß im Anschluss an die Bestimmung der Auslaufzeit bestimmt, wobei das Ausbreitmaß der Spachtelmasse 4 min nach Fließstart bestimmt wird. In bestimmten Ausführungsformen wird das Ausbreitmaß dadurch bestimmt, dass die Bestimmung der Auslaufzeit wie oben beschrieben durchgeführt wird, wobei die Spachtelmasse, die durch den Auslaufbecher fließt, auf einer mit Millimeterpapier bedeckten Platte aufgefangen wird und 4 min nach dem Fließstart der Auslaufradius, den die aufgefangene Spachtelmasse auf der Glasplatte bedeckt, anhand des Millimeterpapiers abgelesen wird. Insbesondere kann das Ausbreitmaß nach der im untenstehenden Absatz "Bestimmung der Auslaufzeit (in Sekunden (s)) und des Ausbreitmaßes (in Zentimeter (cm))" bestimmt werden.

Gemäß einigen Ausführungsformen umfasst die selbstnivellierende Spachtelmasse neben der oben definierten Pflanzenkohle außerdem Zement, CaSO₄-Bindemittel, Füllstoffe und Zusatzstoffe. In manchen Ausführungsformen besteht die selbstnivellierende Spachtelmasse aus Zement, CaSO₄-Bindemittel, Füllstoffen, Zusatzstoffen und Pflanzenkohle. Gemäß dieser Ausführungsformen bezieht sich die selbstnivellierende Spachtelmasse auf eine Trockenmischung einer Spachtelmasse, bevor diese mit Wasser angemacht wird. In bestimmten Ausführungsformen besteht die selbstnivellierende Spachtelmasse aus Zement, CaSO₄-Bindemittel, Füllstoffen, Zusatzstoffen, Pflanzenkohle und Wasser. Gemäß dieser Ausführungsformen bezieht sich die selbstnivellierende Spachtelmasse auf eine Spachtelmasse, die mit Wasser angemacht ist. Durch diese Ausführungsformen können die selbstnivellierenden Eigenschaften der Spachtelmasse weiter verbessert und eine schnelle Trocknung und ein zügiges Abbinden der Spachtelmasse weiter gefördert werden.

In manchen Ausführungsformen ist der Zement dabei ausgewählt aus Tonerdeschmelzzement, Portlandzement, Calciumsulfoaluminatzement und Kombinationen davon. Insbesondere kann der Zement eine Mischung aus Tonerdeschmelzzement und Portlandzement sein. In einigen Ausführungsformen kann der Tonerdeschmelzzement die chemischen Zusammensetzung 36-44 Gew.-% Al₂O₃, 34-42 Gew.-% CaO, 2-8 Gew.-% SiO₂,12-20 Gew.-% Fe₂O₃, bezogen auf das Gesamtgewicht des Tonerdeschmelzzements, aufweisen. Insbesondere kann der Tonerdeschmelzzement die chemischen Zusammensetzung 4-6 Gew.-% SiO₂, 38-42 Gew.-% Al₂O₃, 13-17 Gew.-% Fe₂O₃, 36-40 Gew.-% CaO oder 3-5 Gew.-% SiO₂, 38-42 Gew.-% Al₂O₃, 14-18 Gew.-% Fe₂O₃, 35-38 Gew.-% CaO aufweisen, bezogen auf das Gesamtgewicht des Tonerdeschmelzzements. Die Tonerdeschmelzzemente können ferner bis zu 1,5 Gew.-% MgO und bis zu 0,4 Gew.-% SO₃ enthalten, bezogen auf das Gesamtgewicht des jeweiligen Tonerdeschmelzzements. Geeignete Tonerdeschmelzzemente sind beispielsweise ISTRA40, LUMNITE MG4 und Ternal RG. Gemäß bestimmten Ausführungsformen weist der Portlandzement die chemische Zusammensetzung 18-25 Gew.-% SiO₂, 2-6 Gew.-% Al₂O₃, 1-4 Gew.-% Fe₂O₃, 62-69 Gew.-% CaO, 2-5 Gew.-% SO₃ auf, bezogen auf das Gesamtgewicht des Portlandzements. Insbesondere kann der Portlandzement die chemische Zusammensetzung 21-24 Gew.-% SiO₂, 3-5 Gew.-% Al₂O₃, 1-2 Gew.-% Fe₂O₃, 63-68 Gew.-% CaO, 3-4 Gew.-% SO₃ oder 19-20 Gew.-% SiO₂, 5-7 Gew.-% Al₂O₃, 2-3 Gew.-% Fe₂O₃, 63-64 Gew.-% CaO, 3-4 Gew.-% SO₃ aufweisen, bezogen auf das Gesamtgewicht des Portlandzements. Geeignete Portlandzemente sind beispielsweise Milke Plus CEM I 52,5 R, Milke Premium CEM I 52,5 R und Schwenk CEM I 52,5 R. In bestimmten Ausführungsformen weist der Calciumsulfoaluminatzement die chemische Zusammensetzung 5-10 Gew.-% SiO₂, 15-25 Gew.-% Al₂O₃, 1-5 Gew.-% Fe₂O₃, 30-50 Gew.-% CaO, 15-25 Gew.-% SO₃ auf, bezogen auf das Gesamtgewicht des Calciumsulfoaluminatzements. Insbesondere kann der Calciumsulfoaluminatzement die chemische Zusammensetzung 6 Gew.-% SiO₂, 22 Gew.-% Al₂O₃, 1 Gew.-% Fe₂O₃, 35 Gew.-% CaO, 16 Gew.-% SO₃ aufweisen, bezogen auf das Gesamtgewicht des Calciumsulfoaluminatzements. Ein geeigneter Calciumsulfoaluminatzement ist beispielsweise AliCEM.

In manchen Ausführungsform ist das CaSO₄-Bindemittel ausgewählt aus der Gruppe bestehend aus Calciumsulfat-Hemihydrat (Calciumsulfat-α-Hemihydrat und/oder Calciumsulfat-β-Hemihydrat), Calciumsulfat-Anhydrit, Calciumsulfat-Dihydrat und Kombinationen davon. Vorzugsweise ist das CaSO₄-Bindemittel Calciumsulfat-α-Hemihydrat.

Gemäß bestimmten Ausführungsformen sind die Füllstoffe ausgewählt aus der Gruppe bestehend aus Sand, Kalksteinmehl, Dolomit und Kombinationen davon. In bevorzugten Ausführungsformen sind die Füllstoffe ausgewählt aus der Gruppe bestehend aus Sand, Kalksteinmehl und Kombinationen davon. Gemäß weiter bevorzugten Ausführungsformen sind die Füllstoffe eine Kombination aus Sand und Kalksteinmehl. Dabei kann der Sand Quarzsand sein und/oder eine Partikelgröße von 0,06 bis 0,3 mm aufweisen. In manchen Ausführungsformen hat das Kalksteinmehl eine Partikelgröße von 0 bis 90 µm. In bestimmten Ausführungsformen werden die Partikelgröße des Sandes und/oder des Kalksteinmehls über Siebrückstände bestimmt. Durch diese Ausführungsformen werden die anwendungstechnischen Eigenschaften der Spachtelmasse weiter verbessert.

Gemäß einigen Ausführungsformen sind die Zusatzstoffe ausgewählt aus der Gruppe bestehend aus Dispersionspulver, Beschleuniger, Verzögerer, Rheologie-Additive und Kombinationen davon. In bevorzugten Ausführungsformen sind die Zusatzstoffe eine Kombination aus Dispersionspulver, Verzögerer, Rheologie-Additive und Beschleuniger. In manchen Ausführungsformen ist das Dispersionspulver ausgewählt aus der Gruppe bestehend aus Ethylen-Vinylacetat-Copolymere, Ethylen-Vinylversatat-Copolymere, Styrolacrylate und Kombinationen davon. In bevorzugten Ausführungsformen ist das Dispersionspulver Ethylen-Vinylacetat-Copolymer. In bestimmten Ausführungsformen ist der Beschleuniger ausgewählt aus der Gruppe bestehend aus Alkalicarbonate, Alkalisulfate oder Kombinationen davon. Gemäß bevorzugter Ausführungsformen ist der Beschleuniger ein Alkalicarbonat, insbesondere Lithiumcarbonat. Gemäß bestimmten Ausführungsformen ist der Verzögerer ausgewählt aus der Gruppe bestehend aus Fruchtsäuren, Phosphate, Polyphosphate, Alkaligluconate, Saccharide, Alkali-Tartrate oder Kombinationen davon. Dabei können die Fruchtsäuren Weinsäure oder Zitronensäure sein. In bevorzugten Ausführungsformen ist der Verzögerer Zitronensäure. Gemäß bestimmten Ausführungsformen sind die Rheologie-Additive ausgewählt aus der Gruppe bestehend aus Verdicker, Verflüssiger und Kombinationen davon. Insbesondere können die Rheologie-Additive eine Kombination aus Verdicker und Verflüssiger sein. In manchen Ausführungsformen ist der Verflüssiger ein Kammpolymer auf Basis von Poly(meth)acrylsäure mit Polyethylenoxidseitenketten (PCEs, Polycarboxylatether). In bevorzugten Ausführungsformen ist der Verflüssiger Polycarboxylatether. Gemäß einiger Ausführungsformen ist der Verdicker ein Amid-basierter Polyelektrolyt mit Sulfonsäuregruppen. Bei diesen Ausführungsformen sind die oben genannten Vorteile und Effekte besonders ausgeprägt.

In einigen Ausführungsformen ist die selbstnivellierende Spachtelmasse auf Zement-Basis und umfasst neben der oben definierten Pflanzenkohle außerdem 15 bis 45 Gew.-%, bevorzugt 20 bis 30 Gew.-% und weiter bevorzugt 22 bis 25 Gew.-% Zement, 5 bis 15 Gew.-%, bevorzugt 6 bis 10 Gew.-% und weiter bevorzugt 7 bis 9 Gew.-% CaSO₄-Bindemittel, 40 bis 75 Gew.-%, bevorzugt 50 bis 60 Gew.-% und weiter bevorzugt 53 bis 57 Gew.-% Füllstoffe und 1 bis 8 Gew.-%, bevorzugt 2 bis 7 Gew.-% und weiter bevorzugt 3 bis 5 Gew.-% Zusatzstoffe, basierend auf dem Trockengewicht der selbstnivellierenden Spachtelmasse. Durch diese Ausführungsformen können die selbstnivellierenden Eigenschaften der Spachtelmasse weiter verbessert und eine schnelle Trocknung und ein zügiges Abbinden der Spachtelmasse weiter gefördert werden. Gemäß bestimmten Ausführungsformen besteht die selbstnivellierende Spachtelmasse auf Zement-Basis aus den vorstehend genannten Komponenten, wobei sich die Gewichtsprozente (Gew.-%) insgesamt zu 100 Gew.-% addieren. Gemäß dieser Ausführungsformen bezieht sich die selbstnivellierende Spachtelmasse auf eine Trockenmischung einer Spachtelmasse, bevor diese mit Wasser angemacht wird.

Gemäß bestimmten Ausführungsformen ist die selbstnivellierende Spachtelmasse auf Zement-Basis und umfasst neben der oben definierten Pflanzenkohle außerdem 10 bis 30 Gew.-%, bevorzugt 12 bis 18 Gew.-% und weiter bevorzugt 13 bis 16 Gew.-% Tonerdeschmelzzement, 5 bis 15 Gew.-%, bevorzugt 6 bis 12 Gew.-% und weiter bevorzugt 7 bis 10 Gew.-% Portlandzement, 5 bis 15 Gew.-%, bevorzugt 6 bis 10 Gew.-% und weiter bevorzugt 7 bis 9 Gew.-% CaSO₄-Bindemittel, 10 bis 25 Gew.-%, bevorzugt 13 bis 21 Gew.-% und weiter bevorzugt 14 bis 20 Gew.-% Kalksteinmehl, 30 bis 50 Gew.-%, bevorzugt 35 bis 45 Gew.-% und weiter bevorzugt 37 bis 43 Gew.-% Sand und 1 bis 8 Gew.-%, bevorzugt 2 bis 7 Gew.-% und weiter bevorzugt 3 bis 5 Gew.-% Zusatzstoffe, basierend auf dem Trockengewicht der selbstnivellierenden Spachtelmasse. Durch diese Ausführungsformen können die selbstnivellierenden Eigenschaften der Spachtelmasse weiter verbessert und eine schnelle Trocknung und ein zügiges Abbinden der Spachtelmasse weiter gefördert werden. Gemäß bestimmten Ausführungsformen besteht die selbstnivellierende Spachtelmasse auf Zement-Basis aus den vorstehend genannten Komponenten, wobei sich die Gewichtsprozente (Gew.-%) insgesamt zu 100 Gew.-% addieren. Gemäß dieser Ausführungsformen bezieht sich die selbstnivellierende Spachtelmasse auf eine Trockenmischung einer Spachtelmasse, bevor diese mit Wasser angemacht wird. In bestimmten Ausführungsformen kann die selbstnivellierende Spachtelmasse auf Zement-Basis mit 20 bis 30 Gew.-%, bevorzugt 25 bis 28 Gew.-% Wasser angemacht werden, bezogen auf das Trockengewicht der selbstnivellierenden Spachtelmasse.

In einigen Ausführungsformen umfasst die selbstnivellierende Spachtelmasse auf Zement-Basis als Zusatzstoffe 1 bis 5 Gew.-%, bevorzugt 2 bis 4 Gew.-% und weiter bevorzugt 2,5 bis 3,5 Gew.-% Dispersionspulver, 0,05 bis 0,5 Gew.-%, bevorzugt 0,1 bis 0,4 Gew.-% und weiter bevorzugt 0,15 bis 0,30 Gew.-% Beschleuniger, 0,05 bis 0,5 Gew.-%, bevorzugt 0,1 bis 0,4 Gew.-% und weiter bevorzugt 0,25 bis 0,35 Gew.-% Verzögerer, 0,1 bis 1,0 Gew.-%, bevorzugt 0,2 bis 0,8 Gew.-% und weiter bevorzugt 0,4 bis 0,6 Gew.-% Rheologie-Additive, basierend auf dem Trockengewicht der selbstnivellierenden Spachtelmasse.

Gemäß bestimmten Ausführungsformen bestehen die Rheologie-Additive aus Verdicker und Verflüssiger. Das Gewichtsverhältnis zwischen Verdicker und Verflüssiger (Verdicker:Verflüssiger) kann dabei 5:1 bis 1:5, bevorzugt 5:2 bis 2:5, weiter bevorzugt 3:2 bis 2:3 betragen. Durch diese Ausführungsformen werden die anwendungstechnischen Eigenschaften der Spachtelmasse weiter verbessert.

In manchen Ausführungsformen ist die selbstnivellierende Spachtelmasse auf Gips-Basis und umfasst neben der oben definierten Pflanzenkohle außerdem 0,5 bis 7,5 Gew.-%, bevorzugt 1 bis 6 Gew.-% und weiter bevorzugt 2 bis 5 Gew.-% Zement, 30 bis 60 Gew.-%, bevorzugt 35 bis 50 Gew.-% und weiter bevorzugt 41 bis 47 Gew.-% CaSO₄-Bindemittel, 30 bis 55 Gew.-%, bevorzugt 35 bis 50 Gew.-% und weiter bevorzugt 37 bis 45 Gew.-% Füllstoffe und 1 bis 8 Gew.-%, bevorzugt 1,5 bis 5 Gew.-% und weiter bevorzugt 2 bis 4 Gew.-% Zusatzstoffe, basierend auf dem Trockengewicht der selbstnivellierenden Spachtelmasse. Durch diese Ausführungsformen können die selbstnivellierenden Eigenschaften der Spachtelmasse weiter verbessert und eine schnelle Trocknung und ein zügiges Abbinden der Spachtelmasse weiter gefördert werden. Gemäß bestimmten Ausführungsformen besteht die selbstnivellierende Spachtelmasse auf Gips-Basis aus den vorstehend genannten Komponenten, wobei sich die Gewichtsprozente (Gew.-%) insgesamt zu 100 Gew.-% addieren. Gemäß dieser Ausführungsformen bezieht sich die selbstnivellierende Spachtelmasse auf eine Trockenmischung einer Spachtelmasse, bevor diese mit Wasser angemacht wird. In bestimmten Ausführungsformen kann die selbstnivellierende Spachtelmasse auf Gips-Basis mit 20 bis 30 Gew.-%, bevorzugt 22 bis 25 Gew.-% Wasser angemacht werden, bezogen auf das Trockengewicht der selbstnivellierenden Spachtelmasse.

Gemäß bestimmten Ausführungsformen ist die selbstnivellierenden Spachtelmasse auf Gips-Basis und umfasst neben der oben definierten Pflanzenkohle außerdem 0,4 bis 5 Gew.-%, bevorzugt 1 bis 4,5 Gew.-% und weiter bevorzugt 2 bis 4 Gew.-% Tonerdeschmelzzement, 0,1 bis 2,5 Gew.-%, bevorzugt 0,5 bis 2 Gew.-% und weiter bevorzugt 0,7 bis 1,5 Gew.-% Portlandzement, 30 bis 60 Gew.-%, bevorzugt 35 bis 50 Gew.-% und weiter bevorzugt 41 bis 47 Gew.-% CaSO₄-Bindemittel, 20 bis 30 Gew.-%, bevorzugt 22 bis 28 Gew.-% und weiter bevorzugt 23 bis 27 Gew.-% Kalksteinmehl, 10 bis 25 Gew.-%, bevorzugt 14 bis 23 Gew.-% und weiter bevorzugt 16 bis 20 Gew.-% Sand und 1 bis 8 Gew.-%, bevorzugt 1,5 bis 5 Gew.-% und weiter bevorzugt 2 bis 4 Gew.-% Zusatzstoffe, basierend auf dem Trockengewicht der selbstnivellierenden Spachtelmasse. Durch diese Ausführungsformen können die selbstnivellierenden Eigenschaften der Spachtelmasse weiter verbessert und eine schnelle Trocknung und ein zügiges Abbinden der Spachtelmasse weiter gefördert werden. Gemäß bestimmten Ausführungsformen besteht die selbstnivellierende Spachtelmasse auf Gips-Basis aus den vorstehend genannten Komponenten, wobei sich die Gewichtsprozente (Gew.-%) insgesamt zu 100 Gew.-% addieren. Gemäß dieser Ausführungsformen bezieht sich die selbstnivellierende Spachtelmasse auf eine Trockenmischung einer Spachtelmasse, bevor diese mit Wasser angemacht wird.

In einigen Ausführungsformen umfasst die selbstnivellierende Spachtelmasse auf Gips-Basis als Zusatzstoffe 0,5 bis 4 Gew.-%, bevorzugt 1 bis 3 Gew.-% und weiter bevorzugt 1,5 bis 2,5 Gew.-% Dispersionspulver, 0,05 bis 0,5 Gew.-%, bevorzugt 0,1 bis 0,4 Gew.-% und weiter bevorzugt 0,15 bis 0,30 Gew.-% Beschleuniger, 0,05 bis 0,5 Gew.-%, bevorzugt 0,1 bis 0,4 Gew.-% und weiter bevorzugt 0,25 bis 0,35 Gew.-% Verzögerer, 0,1 bis 1,0 Gew.-%, bevorzugt 0,2 bis 0,8 Gew.-% und weiter bevorzugt 0,4 bis 0,6 Gew.-% Rheologie-Additive, basierend auf dem Trockengewicht der selbstnivellierenden Spachtelmasse.

Gemäß bestimmten Ausführungsformen bestehen die Rheologie-Additive aus Verdicker und Verflüssiger. Das Gewichtsverhältnis zwischen Verdicker und Verflüssiger (Verdicker:Verflüssiger) kann dabei 5:1 bis 1:5, bevorzugt 5:2 bis 2:5, weiter bevorzugt 3:2 bis 2:3 betragen. Durch diese Ausführungsformen werden die anwendungstechnischen Eigenschaften der Spachtelmasse weiter verbessert.

Ein zweiter Aspekt der vorliegenden Erfindung bezieht sich auf die Verwendung von Pflanzenkohle zur Reduktion des Treibhauspotentials von selbstnivellierenden Spachtelmassen auf Zement- oder Gips-Basis, wobei die Pflanzenkohle eine Partikelgröße d10 von höchstens 3,2 µm und eine spezifische Oberfläche von mindestens 7800 cm²/g aufweist. Wie oben beschrieben kann durch den Einsatz der Pflanzenkohle mit den genannten Eigenschaften der Selbstverlauf der Spachtelmasse erreicht und der GWP-Wert erheblich verringert werden. Die obigen Ausführungen zum ersten Aspekt der Erfindung gelten hier analog.

### Herstellungsverfahren der selbstnivellierenden Spachtelmasse

Die Herstellung der erfindungsgemäßen selbstnivellierenden Spachtelmasse kann durch sukzessives Vermischen der oben genannten Bestandteile der erfindungsgemäßen selbstnivellierenden Spachtelmasse in beliebiger Reihenfolge oder durch gleichzeitiges Vermischen in einer für diese Zwecke üblichen Mischvorrichtung erfolgen. Mit den Bestandteilen sind insbesondere Pflanzenkohle, Zement, CaSO₄-Bindemittel, Füllstoffe, Zusatzstoffe und optional Wasser gemeint. Die obigen Ausführungen zum ersten Aspekt der Erfindung gelten hier analog.

Alternativ oder zusätzlich kann eine Rezeptur einer im Stand der Technik bekannten selbstnivellierenden Spachtelmasse eingesetzt werden, wobei ein Anteil eines in der selbstnivellierenden Spachtelmasse enthaltenen Füllstoffs durch die oben beschriebene Pflanzenkohle ersetzt wird. Die obigen Ausführungen zum ersten Aspekt der Erfindung gelten hier analog.

### Bestimmung der Auslaufzeit (in Sekunden (s)) und des Ausbreitmaßes (in Zentimeter (cm))

Zur Bestimmung der Auslaufzeit und des Ausbreitmaßes können ein Auslaufbecher aus Aluminium der Firma Erichsen, Modell 243/II, mit einer 6 mm Düse, eine Stoppuhr mit Sekundenanzeige, eine Glasplatte 30x30 cm oder größer, Millimeterpapier, ein 500 ml Anrührgefäß und ein Vollrath-Laborrührer EWTHV 0,5 mit Scheibenrührer, Durchmesser ca. 65 mm eingesetzt werden. Das Millimeterpapier sollte wassergeschützt sein (Schutzhülle oder laminiert). Zur vereinfachten Ablesbarkeit sollten im Abstand von 1 cm konzentrische Kreise gezogen und mit Angabe des entsprechenden Radius auf dem Millimeterpapier eingezeichnet werden. Der Auslaufbecher kann auf einem Stativ in einer Höhe von 17,5 cm fixiert werden, was 11 cm Fallhöhe für das angerührte Material entspricht. Der Fuß des Statives sollte außerhalb der darunterliegenden Glasplatte sein, damit genug Fläche zum Ausbreiten der Spachtelmasse vorhanden ist. Dann können 500 g Spachtelmasse mit 23 bis 27 Gew.-% Wasser, basierend auf dem Trockengewicht der Spachtelmasse, in das Anrührgefäß gegeben und anschließend 45 s mit dem Laborrührer homogenisiert (Mischtemperatur ca. 18-20 °C) werden. Anschließend kann wie folgt vorgegangen werden: In ein Stativ, welches auf der Arbeitsfläche steht, wird der Auslaufbecher eingehängt. Ein Millimeterpapier wird daruntergelegt (die Mitte des Papiers muss sich senkrecht unter der Düse befinden). Darauf wird eine trockene Glasplatte gelegt. 30 s nach dem Anmachen der Spachtelmasse wird der Auslaufbecher bis zum Rand befüllt, dessen Auslaufdüse mit einem Finger verschlossen wird. Überschüssiges Material wird mit einer kleinen Glasplatte oder einem Spatel abgestreift. Nach weiteren 15 s seit Beginn des Befüllens, insgesamt nach 45 s nach Anmachen der Spachtelmasse, erfolgt der "Fließstart": Der Finger wird von der Düsenöffnung entfernt und gleichzeitig mit der anderen Hand eine Stoppuhr gestartet. Nun wird beobachtet, wie lange die Masse aus dem Becher fließt. Kommt es zu einem deutlichen Abriss des Auslaufflusses, wird die Stoppuhr gestoppt. Diese Zeit des Fadenabrisses entspricht der Auslaufzeit.

Anschließend an die beschriebene Durchführung der Bestimmung der Auslaufzeit kann zur Messung des Ausbreitmaßes 4 min nach dem Fließstart der Auslaufradius, den die aufgefangene Spachtelmasse auf der Glasplatte bedeckt, anhand des Millimeterpapiers abgelesen werden. Der Auslaufradius wird an vier um ca. 90° versetzten Positionen abgelesen und gemittelt (Ablesegenauigkeit 1 mm). Der Mittelwert wird auf ganze mm abgerundet.

### Bestimmung des Wassergehalts von Pflanzenkohle (in Gew.-%, basierend auf dem Gesamtgewicht der Pflanzenkohle)

Zur Bestimmung des Wassergehalts von Pflanzenkohle können eine Edelstahl Darr-Schale mit einem Durchmesser von etwa 10 cm und einer Höhe von etwa 1,5 cm, ein Binder Trockenschrank Modell ED 115 und eine Mettler Toledo Laborwaage Modell XS6002SDR eingesetzt und wie folgt vorgegangen werden. 50 bis 100 g Pflanzenkohle werden in die Darr-Schale eingewogen, wobei die Einwaage festzuhalten ist. Anschließend wird die Darr-Schale mit der Pflanzenkohle in den Darr-Ofen (vorgeheizt auf 40 °C) gegeben und bis zur Gewichtskonstanz getrocknet. Das Gewicht der Proben wird über die Laborwaage bestimmt. Der Gewichtsverlust dividiert durch das Trockengewicht der Ausgangsprobe und anschließend multipliziert mit 100 entspricht dem angegeben Wassergehalt.

### Bestimmung des Feuchtigkeitsgehalts von Spachtelmassen (in Gew.-%, basierend auf dem Pulvergewicht der Spachtelmasse)

Zur Bestimmung des Feuchtigkeitsgehalts von pulverförmigen Spachtelmassen kann ein Trockenschrank verwendet werden. Dabei wird eine Trocknungstemperatur von 40 °C eingestellt und eine Einwaage von ca. 100 g der zu untersuchenden pulverförmigen Spachtelmasse verwendet. Die Messung wird bei Gewichtskonstanz beendet, spätestens jedoch nach 24 h. Gewichtskonstanz ist erreicht, wenn zwei aufeinanderfolgende Messungen einen Gewichtsunterschied von maximal 0,02 g aufweisen. Der Gewichtsverlust dividiert durch das Trockengewicht der Ausgangsprobe und anschließend multipliziert mit 100 entspricht dem angegeben Feuchtigkeitsgehalt.

### Bestimmung der Partikelgrößenverteilung, der Partikelgrößen d10, d50, d90 und d99 (in Mikrometer (µm)) und der spezifischen Oberfläche (in Quadratzentimeter pro Gramm (cm²/g))

Zur Bestimmung der Partikelgrößenverteilung und Partikelgrößen d10, d50, d90 und d99 kann ein Lasergranulometer der Firma Sypatec mit der Bezeichnung HELOS Typ H2321 mit einem Messbereich R4:0.5/1,6...350 µm und ein RODOS-Trockendispergierer eingesetzt und wie folgt vorgegangen werden. In den Trichter der Probenaufgabeeinheit wird ca. 5 g der Probe vorgelegt. Folgende Parameter können dabei eingestellt werden: Primärdruck = 1 bar, Vakuum = 65 mbar, 0% Drehgeschwindigkeit, Förderrate der Vibrationsrinne 60 %, Betthöhe 1,00 mm, Trichterspalt 1 mm. Die Messung beginnt bei einer optischen Konzentration von 2,1% und wird beendet bei einer Konz. < 1,9% für 5 s oder spätestens nach 99 s. Gemessen wird im HLRD-Modus (high resolution diffraction mode). Angenommen wird eine theoretische Dichte von 1 und ein Heywoodfaktor von 1. Die Auswertung erfolgt mit Windox 5.10.0.4.

### Bestimmung des Aschegehalts von Pflanzenkohle (in Gew.-%, basierend auf dem Gesamtgewicht der Pflanzenkohle)

Zur Bestimmung des Aschegehalts kann ein Thermogravimeter der Firma Netzsch vom Typ STA 449 C eingesetzt und wie folgt vorgegangen werden. Die Bestimmung des Ascherückstandes (TG-Restmasse bei 1150°C) erfolgt durch thermogravimetrische Analyse der Pflanzenkohle mit Hilfe einer Netzsch Jupiter STA 449C Apparatur. Hierzu wird ein Temperaturbereich von 30-1150 °C unter Luft-Stickstofffluss (Luft:Stickstoff / 30:20) mit einer Heizrate wird von 10 K/min (30-550 °C) und 20 K/min (550-1150 °C) durchlaufen. Die Datenauswertung kann mit der Software Netzsch Proteus erfolgen.

### Bestimmung der Biegezug- und Druckfestigkeiten (in Newton pro Quadratmillimeter (N/mm²))

Die Biegezug- und Druckfestigkeiten können nach DIN EN 13892-2:2002 bestimmt werden.

### Beispiele

Die Erfindung wird im Anschluss mit Bezug auf verschiedene Beispiele davon weiter im Detail erläutert. Die Erfindung ist jedoch nicht auf diese Beispiele beschränkt.

### Herstellung selbstverlaufender Spachtelmassen auf Zement-Basis

In Tabelle 1 sind Rezepturen von selbstverlaufenden Spachtelmassen auf Zement-Basis angegeben. Die angegebene Rezeptur des Standes der Technik bezieht sich dabei auf eine kommerziell erhältliche selbstnivellierende Spachtelmasse auf Zement-Basis ohne Pflanzenkohle. Beispiele 1 und 2 sind beispielhafte Rezepturen von erfindungsgemäßen Spachtelmassen auf Zement-Basis. Die Vergleichsbeispiele sind Rezepturen von Spachtelmassen auf Zement-Basis, die nicht die erfindungsgemäße Pflanzenkohle enthalten. Die Abkürzung "BK" steht dabei für Pflanzenkohle. Als Dispersionspulver wurde Ethylen-Vinylacetat-Copolymer, als Beschleuniger ein Alkalicarbonat, als Verzögerer Zitronensäure, als Rheologie-Additive ein Polycarboxylatether und ein Amid-basierter Polyelektrolyt mit Sulfonsäuregruppen, als CaSO₄-Bindemittel Calciumsulfat-α-Hemihydrat, als Tonerdeschmelzzement ISTRA 40, und als Portlandzement Schwenk CEM I 52,5 R eingesetzt. Die Angaben mit Ausnahme der GWP-Daten sind in Gewichtsprozent (Gew.-%), bezogen auf das Trockengewicht der jeweiligen Spachtelmasse.

**Tabelle 1: Zusammensetzungen von beispielhaften selbstnivellierenden Spachtelmassen auf Zement-Basis und deren GWP-Werte. Die Angaben mit Ausnahme der GWP-Daten sind in Gewichtsprozent (Gew.-%), bezogen auf das Trockengewicht der jeweiligen Spachtelmasse.**

| **Komponenten** | **Stand der Technik 1** | **Beispiel 1** | **Beispiel 2** | **Vergleichsbeispiel 1** | **Vergleichsbeispiel 2** | **Vergleichsbeispiel 3** | **Vergleichsbeispiel 4** | **Vergleichsbeispiel 5** |
|---|---|---|---|---|---|---|---|---|
| **Tonerdeschmelzzement** | 14 | 14 | 14 | 14 | 14 | 14 | 14 | 14 |
| **Portlandzement** | 9 | 9 | 9 | 9 | 9 | 9 | 9 | 9 |
| **CaSO₄-Bindemittel** | 8 | 8 | 8 | 8 | 8 | 8 | 8 | 8 |
| **BK-1** | 0 | 8 | 10 | 0 | 0 | 0 | 0 | 0 |
| **BK-2** | 0 | 0 | 0 | 10 | 0 | 0 | 0 | 0 |
| **BK-3** | 0 | 0 | 0 | 0 | 10 | 0 | 0 | 0 |
| **BK-4** | 0 | 0 | 0 | 0 | 0 | 10 | 0 | 0 |
| **BK-5** | 0 | 0 | 0 | 0 | 0 | 0 | 10 | 0 |
| **BK-6** | 0 | 0 | 0 | 0 | 0 | 0 | 0 | 10 |
| **Kalksteinmehl 0** - **90 µm** | 26 | 18 | 16 | 16 | 16 | 16 | 16 | 16 |
| **Sand 0,06** - **0,3 mm** | 39 | 39 | 39 | 39 | 39 | 39 | 39 | 39 |
| **Dispersionspulver** | 3 | 3 | 3 | 3 | 3 | 3 | 3 | 3 |
| **Beschleuniger** | 0,2 | 0,2 | 0,2 | 0,2 | 0,2 | 0,2 | 0,2 | 0,2 |
| **Verzögerer** | 0,3 | 0,3 | 0,3 | 0,3 | 0,3 | 0,3 | 0,3 | 0,3 |
| **Rheologie-Additive** | 0,5 | 0,5 | 0,5 | 0,5 | 0,5 | 0,5 | 0,5 | 0,5 |
| **Summe** | 100 | 100 | 100 | 100 | 100 | 100 | 100 | 100 |
| **Anmachwasser** | 26 | 26 | 27 | 27 | 27 | 27 | 27 | 27 |
| **GWP [kg CO₂-Äq/kg]** | 0,31 | 0,064 | 0,002 | 0,002 | 0,002 | 0,002 | 0,002 | 0,002 |
| **GWP-Reduktion** [%] | - | 79 | 99 | 99 | 99 | 99 | 99 | 99 |

### Herstellung selbstverlaufender Spachtelmassen auf Gips-Basis

In Tabelle 2 sind Rezepturen von selbstverlaufenden Spachtelmassen auf Gips-Basis angegeben. Die angegebene Rezeptur des Standes der Technik bezieht sich dabei auf eine kommerziell erhältliche selbstnivellierende Spachtelmasse auf Gips-Basis ohne Pflanzenkohle. Beispiel 3 ist eine beispielhafte Rezeptur einer erfindungsgemäßen Spachtelmasse auf Gips-Basis. Das Vergleichsbeispiel 6 ist eine Rezeptur einer Spachtelmasse auf Gips-Basis, die nicht die erfindungsgemäße Pflanzenkohle enthält. Die Abkürzung "BK" steht dabei für Pflanzenkohle. Als Dispersionspulver wurde Ethylen-Vinylacetat-Copolymer, als Beschleuniger ein Alkalicarbonat, als Verzögerer Zitronensäure, als Rheologie-Additive ein Polycarboxylatether und ein Amid-basierter Polyelektrolyt mit Sulfonsäuregruppen, als CaSO₄-Bindemittel Calciumsulfat-α-Hemihydrat, als Tonerdeschmelzzement ISTRA 40 und als Portlandzement Schwenk CEM I 52,5 R eingesetzt. Die Angaben mit Ausnahme der GWP-Daten sind in Gewichtsprozent (Gew.-%), bezogen auf das Trockengewicht der jeweiligen Spachtelmasse.

**Tabelle 2: Zusammensetzungen von beispielhaften selbstnivellierenden Spachtelmassen auf Gips-Basis und deren GWP-Werte. Die Angaben mit Ausnahme der GWP-Daten sind in Gewichtsprozent (Gew.-%), bezogen auf das Trockengewicht der jeweiligen Spachtelmasse.**

| **Komponenten** | **Stand der Technik 2** | **Beispiel 3** | **Vergleichsbeispiel 6** |
|---|---|---|---|
| **Tonerdeschmelzzement** | 3 | 3 | 3 |
| **Portlandzement** | 1 | 1 | 1 |
| **CaSO₄-Bindemittel** | 45 | 45 | 45 |
| **BK-1** | 0 | 6 | 0 |
| **BK-2** | 0 | 0 | 6 |
| **BK-3** | 0 | 0 | 0 |
| **BK-4** | 0 | 0 | 0 |
| **BK-5** | 0 | 0 | 0 |
| **BK-6** | 0 | 0 | 0 |
| **Kalksteinmehl 0** - **90 µm** | 30 | 24 | 24 |
| **Sand 0,06** - **0,3 mm** | 18 | 18 | 18 |
| **Dispersionspulver** | 2 | 2 | 2 |
| **Beschleuniger** | 0,2 | 0,2 | 0,2 |
| **Verzögerer** | 0,3 | 0,3 | 0,3 |
| **Rheologie-Additive** | 0,5 | 0,5 | 0,5 |
| **Summe** | 100 | 100 | 100 |
| **Anmachwasser** | 23 | 24 | 24 |
| **GWP [kg CO₂-Äq/kg]** | 0,26 | 0,075 | 0,075 |
| **GWP-Reduktion** [%] | - | 71 | 71 |

### Charakterisierung der Pflanzenkohlen BK-1 bis BK-6

Von den in den oben beschriebenen beispielhaften Spachtelmassen eingesetzten Pflanzenkohlen BK-1 bis BK-6 wurden die Partikelgrößen d10, d50, d90 und d99, die Partikelgrößenverteilung, die spezifische Oberfläche, der Wassergehalt und der Aschegehalt bestimmt. Die Bestimmungsmethoden sind oben ausgeführt.

**Tabelle 3: Charakterisierung der Pflanzenkohlen BK-1 bis BK-6.**

| **BK-Nr.** | **Part.gr. d10 [µm]** | **Part.gr. d50 [µm]** | **Part.gr. d90 [µm]** | **Part.gr. d99 [µm]** | **Spez. Oberfl. [cm²/g]** | **Wasser-gehalt [Gew.-%]** | **Asche-gehalt [Gew.-%]** |
|---|---|---|---|---|---|---|---|
| **BK-1** | 2,85 | 16,21 | 67,33 | 129,98 | 8280 | 4,1 | 4,7 |
| **BK-2** | 3,65 | 17,43 | 64,63 | 120,96 | 7232 | 1,9 | 9,4 |
| **BK-3** | 9,63 | 94,21 | 227,01 | 311,02 | 3425 | 0,9 | 13,3 |
| **BK-4** | 3,49 | 18,33 | 74,87 | 137,32 | 7291 | 7,9 | 9,7 |
| **BK-5** | 5,44 | 26,06 | 99,79 | 204,6 | 5215 | 3,5 | 4,1 |
| **BK-6** | 6,48 | 36,3 | 136,35 | 237,18 | 4384 | 2,6 | 4,5 |

### Prüfung der Funktionalität und der Selbstverlaufseigenschaften der Spachtelmassen

Die Auslaufzeit, das Ausbreitmaß, die Druckfestigkeit und die Biegezugfestigkeit der Spachtelmassen der Beispiele 1-3, Vergleichsbeispiele 1-6 und des Standes der Technik 1-2 wurden nach den oben ausführlich beschriebenen Bestimmungsmethoden bestimmt. Die Menge an eingesetztem Anmachwasser ist für jede Spachtelmasse aus den Tabellen 1 und 2 ersichtlich. Damit eine Spachtelmasse selbstnivellierend bzw. selbstverlaufend und damit im Kontext der vorliegenden Erfindung funktional ist, darf die Auslaufzeit höchstens 120 s und das Ausbreitmaß mindestens 11 cm betragen. Ferner sollten Spachtelmassen eine Druckfestigkeit von mindestens 16 N/mm² und eine Biegezugfestigkeit von mindestens 3 N/mm² aufweisen. Die Ergebnisse sind in Tabelle 4 dargestellt.

**Tabelle 4: Ergebnisse der Bestimmung der Auslaufzeit, des Ausbreitmaß, der Druckfestigkeit und der Biegezugfestigkeit der Spachtelmassen der Beispiele 1-3, der Vergleichsbeispiele 1-6 und des Standes der Technik 1-2.**

| **Spachtelmasse** | **Auslaufzeit [s]** | **Ausbreitmaß [cm]** | **Druckfestigkeit [N/mm²]** | **Biegezugfestigkeit [N/mm²]** | **Ergebnis** |
|---|---|---|---|---|---|
| **Stand der Technik 1** | 34 | 12,2 | 32 | 8 | Funktional |
| **Beispiel 1** | 70 | 12,2 | 32 | 9 | Funktional |
| **Beispiel 2** | 55 | 12 | 31 | 8 | Funktional |
| **Vergleichsbeispiel 1** | 240* | 9,0 | 25 | 6 | Nicht funktional |
| **Vergleichsbeispiel 2** | 240* | 9,0 | 26 | 6 | Nicht funktional |
| **Vergleichsbeispiel 3** | 240* | 9,0 | 27 | 6 | Nicht funktional |
| **Vergleichsbeispiel 4** | 150 | 10,0 | 27 | 6 | Nicht funktional |
| **Vergleichsbeispiel 5** | 150 | 10,5 | 27 | 6 | Nicht funktional |
| **Stand der Technik 2** | 33 | 12,5 | 37 | 8 | Funktional |
| **Beispiel 3** | 46 | 12,9 | 35 | 8 | Funktional |
| **Vergleichsbeispiel 6** | 160 | 10,6 | 25 | 6 | Nicht funktional |

| | | | | | |
|---|---|---|---|---|---|
| *Test nach 240 s abgebrochen, da das Material in der vorgegebenen Zeit von 4 Minuten nicht durch die Düse fließt. | | | | | |

Wie aus den obigen Ergebnissen hervorgeht, kann eine Spachtelmasse mit gewünschter Funktionalität hinsichtlich des Selbstverlaufs ausschließlich mit der Pflanzenkohle "BK-1" erreicht werden. Diese Pflanzenkohle unterscheidet sich von den in den Vergleichsbeispielen eingesetzten Pflanzenkohlen in der Partikelgrößenverteilung, insbesondere in der Partikelgröße d10, und in der spezifischen Oberfläche. Es ist ersichtlich, dass durch den Einsatz einer Pflanzenkohle mit einer Partikelgröße d10 von höchstens 3,2 µm und einer spezifischen Oberfläche von mindestens 7800 cm²/g Spachtelmassen mit selbstnivellierenden Eigenschaften erlangt werden können.

## Patentansprüche

1. Selbstnivellierende Spachtelmasse auf Zement- oder Gips-Basis, umfassend 3 bis 13 Gew.-% Pflanzenkohle, basierend auf dem Trockengewicht der selbstnivellierenden Spachtelmasse, wobei die Pflanzenkohle eine Partikelgröße d10 von höchstens 3,2 µm und eine spezifische Oberfläche von mindestens 7800 cm²/g aufweist, wobei die Partikelgröße und die spezifische Oberfläche mittels lasergranulometrischer Messung bestimmt werden und wobei sich der Begriff "Pflanzenkohle" auf durch Carbonisierung pflanzlicher und/oder holzartiger Ausgangsstoffe hergestellte Materialien bezieht.

2. Selbstnivellierende Spachtelmasse nach Anspruch 1, wobei die Pflanzenkohle eine Partikelgröße d50 von höchstens 16,7 µm aufweist.

3. Selbstnivellierende Spachtelmasse nach einem der Ansprüche 1 oder 2, wobei die selbstnivellierende Spachtelmasse einen GWP-Wert ("Global Warming Potential", zu Deutsch "Treibhauspotential") von höchstens 0,1 kg CO₂-Äquivalent/kg, bestimmt gemäß DIN EN 15804:2012+A2:2019, aufweist.

4. Selbstnivellierende Spachtelmasse nach einem der vorstehenden Ansprüche, umfassend 5 bis 12 Gew.-% Pflanzenkohle, basierend auf dem Trockengewicht der selbstnivellierenden Spachtelmasse.

5. Selbstnivellierende Spachtelmasse nach einem der vorstehenden Ansprüche, wobei die Pflanzenkohle eine Partikelgröße d10 von mindestens 2,5 µm aufweist.

6. Selbstnivellierende Spachtelmasse nach einem der vorstehenden Ansprüche, wobei die Pflanzenkohle eine spezifische Oberfläche von höchstens 9500 cm²/g aufweist.

7. Selbstnivellierende Spachtelmasse nach einem der vorstehenden Ansprüche, wobei die selbstnivellierende Spachtelmasse eine Auslaufzeit von höchstens 120 s, gemessen mit einem Auslaufbecher mit einer 6 mm Düse nach DIN 53211:1987-06 und/oder ein Ausbreitmaß von mindestens 11 cm aufweist.

8. Selbstnivellierende Spachtelmasse nach einem der vorstehenden Ansprüche, wobei die selbstnivellierende Spachtelmasse ferner Zement, CaSO₄-Bindemittel, Füllstoffe und Zusatzstoffe umfasst, optional wobei der Zement ausgewählt ist aus Tonerdeschmelzzement, Portlandzement, Calciumsulfoaluminatzement und Kombinationen davon, ferner optional wobei die Füllstoffe ausgewählt sind aus Kalksteinmehl, Sand und Kombinationen davon, ferner optional wobei die Zusatzstoffe ausgewählt sind aus Dispersionspulver, Beschleuniger, Verzögerer, Rheologie-Additive und Kombinationen davon.

9. Selbstnivellierende Spachtelmasse nach einem der vorstehenden Ansprüche, wobei die selbstnivellierende Spachtelmasse auf Zement-Basis ist und ferner 15 bis 45 Gew.-% Zement, 5 bis 15 Gew.-% CaSO₄-Bindemittel, 40 bis 75 Gew.-% Füllstoffe und 1 bis 8 Gew.-% Zusatzstoffe, basierend auf dem Trockengewicht der selbstnivellierenden Spachtelmasse, umfasst.

10. Selbstnivellierende Spachtelmasse nach einem der vorstehenden Ansprüche, wobei die selbstnivellierende Spachtelmasse auf Zement-Basis ist und ferner 10 bis 30 Gew.-% Tonerdeschmelzzement, 5 bis 15 Gew.-% Portlandzement, 5 bis 15 Gew.-% CaSO₄-Bindemittel, 10 bis 25 Gew.-% Kalksteinmehl, 30 bis 50 Gew.-% Sand und 1 bis 8 Gew.-% Zusatzstoffe, basierend auf dem Trockengewicht der selbstnivellierenden Spachtelmasse, umfasst.

11. Selbstnivellierende Spachtelmasse nach einem der Ansprüche 1 bis 8, wobei die selbstnivellierende Spachtelmasse auf Gips-Basis ist und ferner 0,5 bis 7,5 Gew.-% Zement, 30 bis 60 Gew.-% CaSO₄-Bindemittel, 30 bis 55 Gew.-% Füllstoffe und 1 bis 8 Gew.-% Zusatzstoffe, basierend auf dem Trockengewicht der selbstnivellierenden Spachtelmasse, umfasst.

12. Selbstnivellierende Spachtelmasse nach einem der Ansprüche 1 bis 8, wobei die selbstnivellierende Spachtelmasse auf Gips-Basis ist und ferner 0,4 bis 5 Gew.-% Tonerdeschmelzzement, 0,1 bis 2,5 Gew.-% Portlandzement, 30 bis 60 Gew.-% CaSO₄-Bindemittel, 20 bis 30 Gew.-% Kalksteinmehl, 10 bis 25 Gew.-% Sand und 1 bis 8 Gew.-% Zusatzstoffe, basierend auf dem Trockengewicht der selbstnivellierenden Spachtelmasse, umfasst.

13. Verwendung von Pflanzenkohle zur Reduktion des Treibhauspotentials (GWP Global Warming Potential) von selbstnivellierenden Spachtelmassen auf Zement- oder Gips-Basis, wobei die Pflanzenkohle eine Partikelgröße d10 von höchstens 3,2 µm und eine spezifische Oberfläche von mindestens 7800 cm²/g aufweist, wobei die Partikelgröße und die spezifische Oberfläche mittels lasergranulometrischer Messung bestimmt werden und wobei sich der Begriff "Pflanzenkohle" auf durch Carbonisierung pflanzlicher und/oder holzartiger Ausgangsstoffe hergestellte Materialien bezieht.

## Claims

1. Self-levelling compound based on cement or gypsum, comprising 3 to 13 wt% of biochar, based on the dry weight of the self-levelling compound, wherein the biochar has a particle size d10 of at most 3.2 µm and a specific surface area of at least 7800 cm²/g, wherein the particle size and the specific surface area are determined by laser granulometric measurement, and wherein the term "biochar" refers to materials that are produced by carbonization of plant-based and/or wood-like starting materials.

2. Self-levelling compound according to claim 1, wherein the biochar has a particle size d50 of at most 16.7 µm.

3. Self-levelling filling compound according to one of claims 1 or 2, wherein the self-levelling compound has a GWP value ("Global Warming Potential") of at most 0.1 kg CO₂ equivalent/kg, determined in accordance with DIN EN 15804:2012+A2:2019.

4. Self-levelling compound according to any one of the preceding claims, comprising 5 to 12 wt% of biochar, based on the dry weight of the self-levelling compound.

5. Self-levelling compound according to any one of the preceding claims, wherein the biochar has a particle size d10 of at least 2.5 µm.

6. Self-levelling compound according to any one of the preceding claims, wherein the biochar has a specific surface area of at most 9500 cm²/g.

7. Self-levelling compound according to any one of the preceding claims, wherein the self-levelling compound has a efflux time of at most 120 s, measured using a flow cup having a 6 mm nozzle according to DIN 53211: 1987-06 and/or a flow spread of at least 11 cm.

8. Self-levelling compound according to any one of the preceding claims, wherein the self-levelling compound further comprises cement, CaSO₄ binder, fillers and additives, optionally wherein the cement is selected from calcium aluminate cement, Portland cement, calcium sulfoaluminate cement and combinations thereof, further optionally wherein the fillers are selected from limestone powder, sand and combinations thereof, further optionally wherein the additives are selected from dispersion powders, accelerators, retarders, rheology additives and combinations thereof.

9. Self-levelling compound according to any one of the preceding claims, wherein the self-levelling compound is based on cement and further comprises 15 to 45 wt% of cement, 5 to 15 wt% of CaSO₄ binder, 40 to 75 wt% of fillers and 1 to 8 wt% of additives, based on the dry weight of the self-levelling compound.

10. Self-levelling compound according to any one of the preceding claims, wherein the self-levelling compound is based on cement and further comprises 10 to 30 wt% of calcium aluminate cement, 5 to 15 wt% of Portland cement, 5 to 15 wt% of CaSO₄ binder, 10 to 25 wt% of limestone powder, 30 to 50 wt% of sand and 1 to 8 wt% of additives, based on the dry weight of the self-levelling compound.

11. Self-levelling compound according to any one of claims 1 to 8, wherein the self-levelling compound is based on gypsum and further comprises 0.5 to 7.5 wt% of cement, 30 to 60 wt% of CaSO₄ binder, 30 to 55 wt% of fillers and 1 to 8 wt% of additives, based on the dry weight of the self-levelling compound.

12. Self-levelling compound according to any one of claims 1 to 8, wherein the self-levelling compound is based on gypsum and further comprises 0.4 to 5 wt% of calcium aluminate cement, 0.1 to 2.5 wt% of Portland cement, 30 to 60 wt% of CaSO₄ binder, 20 to 30 wt% of limestone powder, 10 to 25 wt% of sand and 1 to 8 wt% of additives, based on the dry weight of the self-levelling compound.

13. Use of biochar to reduce the global warming potential (GWP) of self-levelling compounds based on cement or gypsum, wherein the biochar has a particle size d10 of at most 3.2 µm and a specific surface area of at least 7800 cm²/g, wherein the particle size and the specific surface area are determined by laser granulometric measurement, and wherein the term "biochar" refers to materials that are produced by carbonization of plant-based and/or wood-like starting materials.

## Revendications

1. Mastic autonivelant à base de ciment ou de plâtre, comprenant 3 à 13 % en poids de charbon végétal, sur la base du poids sec du mastic autonivelant, le charbon végétal ayant une taille de particules d10 d'au plus 3,2 µm et une surface spécifique d'au moins 7 800 cm²/g, la taille de particules et la surface spécifique étant déterminées par mesure granulométrique au laser, et le terme « charbon végétal » désignant des matériaux produits par carbonisation de matières premières végétales et/ou ligneuses.

2. Mastic autonivelant selon la revendication 1, dans lequel le charbon végétal présente une taille de particules d50 d'au plus 16,7 µm.

3. Mastic autonivelant selon l'une des revendications 1 ou 2, dans lequel le mastic autonivelant présente une valeur PRG (« potentiel de réchauffement global ») d'au plus 0,1 kg d'équivalent CO₂/kg, déterminé selon la norme DIN EN 15804:2012+A2:2019.

4. Mastic autonivelant selon l'une des revendications précédentes, comprenant 5 à 12 % en poids de charbon végétal, sur la base du poids sec du mastic autonivelant.

5. Mastic autonivelant selon l'une des revendications précédentes, dans lequel le charbon végétal présente une taille de particules d10 d'au moins 2,5 µm.

6. Mastic autonivelant selon l'une des revendications précédentes, dans lequel le charbon végétal présente une surface spécifique d'au plus 9 500 cm²/g.

7. Mastic autonivelant selon l'une des revendications précédentes, dans lequel le mastic autonivelant présente un temps d'écoulement d'au plus 120 s, mesuré à l'aide d'une coupe de viscosité munie d'une buse de 6 mm selon la norme DIN 53211:1987-06, et/ou une mesure d'étalement d'au moins 11 cm.

8. Mastic autonivelant selon l'une des revendications précédentes, dans lequel le mastic autonivelant comprend en outre du ciment, des liants à base de CaSO₄, des charges et des additifs, facultativement dans lequel le ciment est choisi parmi le ciment alumineux fondu, le ciment Portland, le ciment sulfoalumineux de calcium et des combinaisons de ceux-ci, en outre facultativement dans lequel les charges sont choisies parmi la poudre de calcaire, le sable et des combinaisons de ceux-ci, en outre facultativement dans lequel les additifs sont en outre choisis parmi la poudre de dispersion, les accélérateurs, les retardateurs, les additifs rhéologiques et des combinaisons de ceux-ci.

9. Mastic autonivelant selon l'une des revendications précédentes, dans lequel le mastic autonivelant est à base de ciment et comprend en outre 15 à 45 % en poids de ciment, 5 à 15 % en poids de liants à base de CaSO₄, 40 à 75 % en poids de charges et 1 à 8 % en poids d'additifs, sur la base du poids sec du mastic autonivelant.

10. Mastic autonivelant selon l'une des revendications précédentes, dans lequel le mastic autonivelant est à base de ciment et comprend en outre 10 à 30 % en poids de ciment alumineux fondu, 5 à 15 % en poids de ciment Portland, 5 à 15 % en poids de liants à base de CaSO₄, 10 à 25 % en poids de poudre de calcaire, 30 à 50 % en poids de sable et 1 à 8 % en poids d'additifs, sur la base du poids sec du mastic autonivelant.

11. Mastic autonivelant selon l'une des revendications 1 à 8, dans lequel le mastic autonivelant est à base de plâtre et comprend en outre 0,5 à 7,5 % en poids de ciment, 30 à 60 % en poids de liants à base de CaSO₄, 30 à 55 % en poids de charges et 1 à 8 % en poids d'additifs, sur la base du poids sec du mastic autonivelant.

12. Mastic autonivelant selon l'une des revendications 1 à 8, dans lequel le mastic autonivelant est à base de plâtre et comprend en outre 0,4 à 5 % en poids de ciment alumineux fondu, 0,1 à 2,5 % en poids de ciment Portland, 30 à 60 % en poids de liants à base de CaSO₄, 20 à 30 % en poids de poudre de calcaire, 10 à 25 % en poids de sable et 1 à 8 % en poids d'additifs, sur la base du poids sec du mastic autonivelant.

13. Utilisation de charbon végétal pour réduire le potentiel de réchauffement global (PRG) de mastics autonivelants à base de ciment ou de plâtre, le charbon végétal ayant une taille de particules d10 d'au plus 3,2 µm et une surface spécifique d'au moins 7 800 cm²/g, la taille de particules et la surface spécifique étant déterminées par mesure granulométrique au laser, et le terme « charbon végétal » désignant des matériaux produits par carbonisation de matières premières végétales et/ou ligneuses.
